# EUROPEAN PATENT SPECIFICATION

(11) **EP 3 542 074 B1**
(45) Date of publication and mention of the grant of the patent: **02.12.2026**
(21) Application number: 17871187.5
(22) Date of filing: 11.10.2017
(51) Int. Cl.: B01D 3/32, F16B 5/00

(54) **CLIP FOR SECURING VESSEL INTERNALS AND METHOD OF ASSEMBLY**
KLAMMER ZUR BEFESTIGUNG VON BEHÄLTEREINBAUTEN UND VERFAHREN ZUR MONTAGE
ATTACHE POUR FIXER DES ÉLÉMENTS INTERNES DE CUVE ET PROCÉDÉ D'ASSEMBLAGE

(30) Priority: 17.11.2016 US 201662423719 P
(43) Date of publication of application: 25.09.2019
(73) Proprietor: UOP LLC, Rosemont, Illinois 60018 (US)
(72) Inventor: SHIH, Derek H., Des Plaines Illinois 60017-5017 (US); BEHM, Michael J., Des Plaines Illinois 60017-5017 (US); SHEEDY, Shawn D., Des Plaines Illinois 60017-5017 (US); WANTUCK, Peter J., Des Plaines Illinois 60017-5017 (US); ULMER, John R., Des Plaines Illinois 60017-5017 (US)
(74) Representative: Boult Wade Tennant LLP
(86) International application number: PCT/US2017/056025
(87) International publication number: WO 2018/093489

(56) References cited:
- DE-A1- 102014 212 240
- DE-A1- 3 045 857
- JP-A- H08 296 621
- RU-U1- 111 321
- US-A- 1 346 487
- US-A- 3 071 400
- US-A- 4 691 493
- US-A1- 2003 070 381
- US-A1- 2007 272 326

## Description

### STATEMENT OF PRIORITY

This application claims priority to U.S. Application No. 62/423719 which was filed November 17, 2016.

### FIELD

The present invention generally relates to a clip for use in vessels, and more particularly relates to a clip assembly for securing a horizontal member to a vertical member.

### BACKGROUND

US 2003/070381 A1 relates to a structure to combine two boards into a box or cabinet by means of a snap catch comprised of a catch piece and a strike piece without using any screw, within, the catch piece being incorporated into a first board and provided with catch-hook while the strike plate being incorporated into a second board provided with recess to receive insertion by the catch from the catch piece to couple both boards to each other, laterally or vertically as required. US 4 691 493 A relates to a thin plate structure.

Vessels, such as, hydroprocessing vessels, reactors, absorbers, strippers, and distillation columns, typically require means for holding down horizontally oriented components relative to vertical components. Such vessels typically promote fluid contacting such as vapor-liquid contacting. Trays are often used to promote vapor-liquid contacting. Often, trays are installed during initial construction of the vessel, as well as removed and installed during vessel downtime for maintenance or refurbishing. Trays typically include a deck with or without openings for allowing liquid to spread out and be contacted by up flowing vapor. Trays also include downcomers that protrude over the deck to provide a weir and extend below the deck to transfer liquid that spills over the weir to the next tray below. Downcomers and decks are typically secured at their periphery to a support ring positioned along an internal circumference of the vessel. However, the deck must be secured to the downcomer to prevent the deck from riding up and reducing the weir height relative to the deck.

### SUMMARY OF THE INVENTION

In the first aspect there is provided a clip assembly as defined in claim 1 of the claims appended hereto. In a second aspect, as defined in claim 3, there is provided a method of holding down a horizontal member in a vessel (10) with the clip assembly as defined in claim 1 of the claims appended hereto.

The clip is designed to save time in the installation and removal of horizontal members in a vessel.

### BRIEF DESCRIPTION OF THE DRAWINGS

The present invention will hereinafter be described in conjunction with the following drawing figures, wherein like numerals denote like elements, and wherein:
FIG. 1 is a side cross-sectional view of a vessel in accordance with an exemplary embodiment;
FIG. 2 is a perspective view of an assembly including a clip in the vessel of FIG. 1 in accordance with an exemplary embodiment;
FIG. 3 is a perspective view of the clip of FIG. 2;
FIG. 4 is a perspective view of the opposite side of the clip of FIG. 2;
FIG. 5 is an perspective view of an assembly of the clip of FIG. 2 in accordance with an exemplary embodiment;
FIG. 6 is an elevational view of the assembly of FIG. 5 in a first position in accordance with an exemplary embodiment;
FIG. 7 is an elevational view of the assembly of FIG. 5 in transition in accordance with an exemplary embodiment;
FIG. 8 is a perspective view of an opposite side of the assembly of FIG. 7 in accordance with an exemplary embodiment;
FIG. 9 is an elevational view of the assembly of FIG. 5 in a second position in accordance with an exemplary embodiment;
FIG. 10 is a perspective view of an opposite side of the assembly of FIG. 9 in accordance with an exemplary embodiment.

### DETAILED DESCRIPTION

The following detailed description of the invention is merely exemplary in nature and is not intended to limit the invention or the application and uses of the invention. Furthermore, there is no intention to be bound by any theory presented in the preceding background of the invention or the following detailed description of the invention.

Various exemplary embodiments contemplated herein are directed to a clip for holding down a horizontal component relative to a vertical component in a contacting vessel. In an aspect, the clip may be for securing a deck to a downcomer in a contacting vessel such as a vapor-liquid contacting vessel. The clip is configured for easy installation in the vessel.

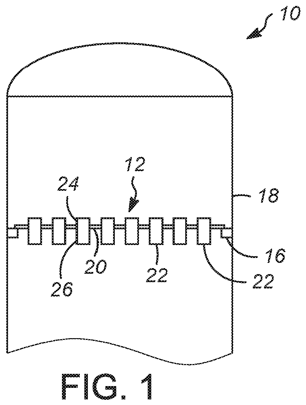

An exemplary vessel 10 is partially illustrated in FIG. 1. The vessel 10 can be any suitable vessel, for example, a hydroprocessing vessel, a reactor, an absorber, a stripper, a distillation column, or the like. Generally, such a vessel 10 facilitates mass transfer operations in a flow orientation, such as down flow, up flow, co-current flow, and counter-current flow for one or more fluids including a vapor, a liquid, and/or a mixed-phase of vapor and liquid and solids such as catalyst. As shown, the vessel 10 includes a mixing, contacting, collecting, and/or redistribution tray 12. While only one tray 12 is shown for illustrative purposes, it will be appreciated that vessel 10 can have any number of trays suitable for a particular application.

As shown, the tray 12 rests on, and is typically secured to, support structure comprising a ring 16 secured circumferentially to a wall 18 of the vessel 10. Usually, the tray 12 comprises a deck 20 that may have several openings for permitting the passage of fluid there-through, such as allowing liquid to flow downward and gas to rise upwards to facilitate mass transfer operations. The tray 12 can also include a plurality of downcomers 22 defining weirs 24. extending above the deck 20 and a distribution trough 26 that extends below the deck 20. Liquid that spills over the weir 24 from the deck 20 into the trough 22 is distributed from openings in the trough to a tray below (not shown). The tray 12 may include other structures, such as bubble caps, tray valves, beams to facilitate and support desired operations.

Downcomers 22 and decks 20 are typically secured at their periphery to a support ring 16 positioned along an internal circumference of the vessel 10 as shown for the deck in FIG. 1. However, the deck 20 must be secured to the downcomer 22 to prevent the deck from riding up and reducing the height of the weir 24 above the deck 20 which could disrupt proper distribution.

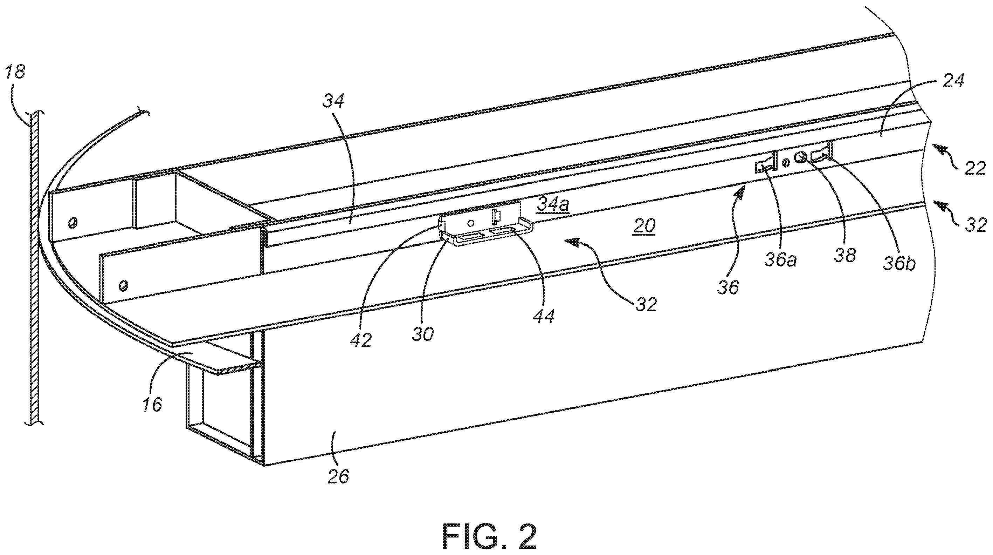

FIG. 2 shows a clip 30 and its assembly 32 for holding down a member in the vessel 10. Specifically, the clip 30 is for holding the deck 20 down relative to the downcomer 22. The clip 30 is part of the assembly 32. The wall 34 is part of the assembly 32. The wall 34 may be part of the downcomer 22 and provide the weir 24 and the trough 26 of the downcomer. Only one downcomer 22 and deck 20 is shown in FIG. 2, but many more may be provided to provide a single tray in the vessel 10. The clip 30 is adapted to be received in a cut-out 36 in the wall 34 in the vessel 10. The clip 30 comprises a first panel 42 and a second panel 44. The second panel 44 is integral with the first panel 42. Moreover, the second panel 44 is normal to the first panel 42. The first panel 42 is for engaging a vertical member which may comprise the wall 34. The second panel 44 is for engaging the horizontal member which may comprise the deck 20.

In FIG. 2, the clip 30 is removed from in front of the cut-out 36 to reveal the cut-out. A recess 38 is disposed laterally to the cut-out. The wall 34 includes a first cut-out 36a and a second cut-out 36b for each assembly 32. The wall 34 includes a first side 34a, and the clip 30 is adapted to be assembled adjacent to the first side.

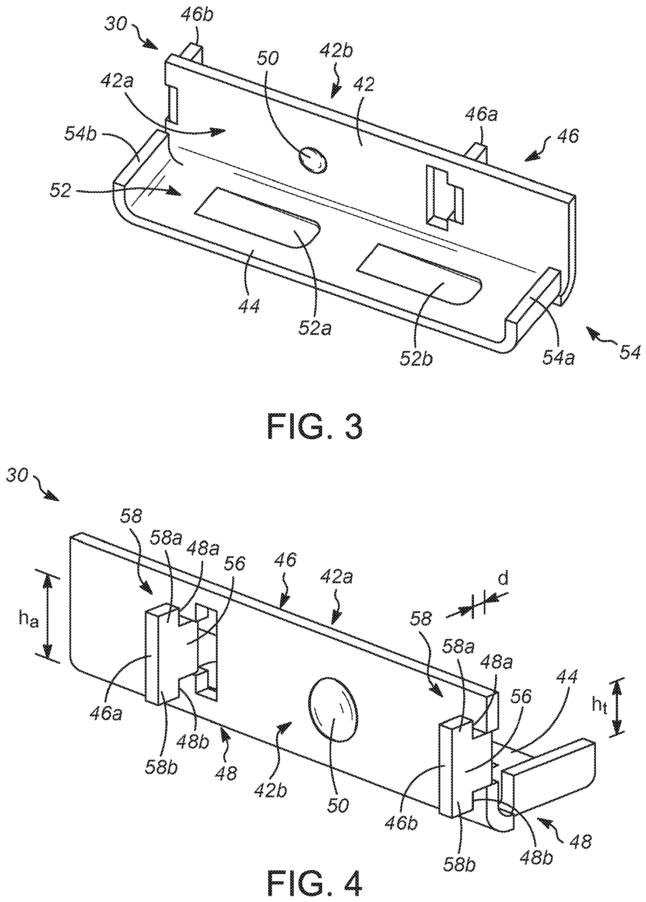

FIG. 3 shows a perspective view of the clip 30. The first panel 42 has a first side 42a and a second side 42b. FIG. 3 best shows the front side 42a. A tab 46 extends from a second side 42b of the first panel 42 away from the second panel 44. A first tab 46a and a second tab 46b extend from the second side of the first panel 42 away from the second panel 44. A protrusion or dimple 50 also protrudes or extends from the second side 42b of the first panel 42 away from the second panel 44. A bill 52 extends from the second panel 44 away from the first panel 42 for applying pressure to the horizontal member which may be the deck 20 of FIG. 2. The second panel 44 may comprise two bills 52a and 52b. The second panel 44 may also be equipped with an upturned edge 54. In an aspect, the second panel 44 may have a first upturned edge 54a and a second upturned edge 54b.

FIG. 4 shows a perspective view of the clip 30 which best shows a second side 42b of the first panel 42. The tabs 46a and 46b comprise a trunk 56 and a lug 58 extending from the trunk. In an embodiment a first lug 58a and a second lug 58b extend from opposing sides of the trunk 56. The tab height hₐ of the tab 46 may be the height of the lug 58a and the trunk 56 together if only one lug 58a is used. If two lugs 58a are used, the tab height hₐ may be the height of the first lug 58a, the trunk 56 and the second lug 58b together. The trunk height ht of the trunk 56 of the tab 46 is also shown in FIG. 4. The depth "d" of the trunk 56 is greater than the thickness of the wall 34 shown in FIG. 2.

The first tab 46a and the second tab 46b extend from the second side 42b of the first panel 42 away from the second panel 44. The tab 46 is cut from the first panel 42 and bent from the first panel 42 from the first side 42a in the direction of the second side 42b away from the second panel 44 to leave an opening in the first panel having the same shape as the tab 46. The first tab 46a may be cut from within four edges of the first panel 42 and thus leaves the same shape in the first panel 42 as the tab 46a. The second tab 46b may be cut from a side edge of the first panel. The tabs 46 are preferably T-shaped. The dimple 50 also protrudes from the second side 42b away from the second panel 44. The lug 58 includes a proximate edge 48. The first lug 58a provides a first proximal edge 48a that faces the second side 42b. The optional second lug 58b may provide a second proximal edge 48b that faces the second side 42b.

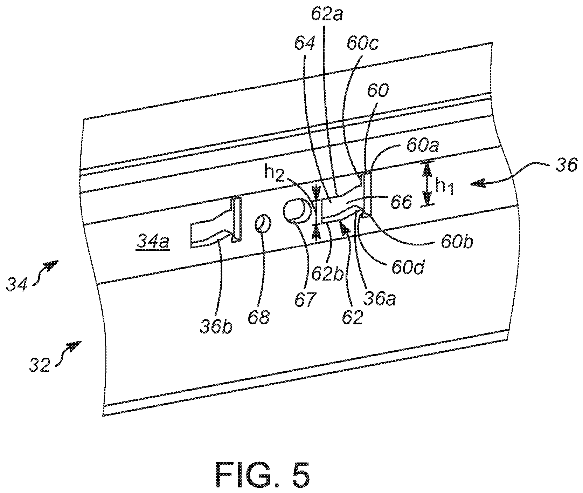

FIG. 5 shows the wall 34 of the assembly 32. The wall 34 comprises a first side 34a and cut-outs 36. The wall 34 has cut-outs 36 in pairs, comprising a first cut-out 36a and a second cut-out 36b, or other multiples grouped together to receive corresponding numbers of tabs 46 shown in FIG. 4. Only one cut-out 36a is described with regard to FIG. 5. The cut-out 36a includes an entry opening 60 of a first height "h₁" between a first upper edge 60a and a first lower edge 60b. The cut-out 36a also includes a channel 62 located laterally to the entry opening 60. The cut-out 36a has a second height h₂ in the channel 62 between a second upper edge 62a and a second lower edge 62b. The channel 62 includes a terminal section 64 in the channel. A second upper edge 62a and a second lower edge 62b in the terminal section 64 may be horizontal and parallel with each other. A transition section 66 in the channel 62 is located between the entry opening 60 and the terminal section 64. The second upper edge 62a in the transition section 66 is an inclined upper edge. Moreover, the second lower edge 62b in the transition section 66 is an inclined lower edge. The second upper edge 62a and the second lower edge 62b in the transition section 66 may be parallel with each other. The second upper edge 62a may also include a horizontal edge in the transition section 66. The second lower edge 62b may also include a horizontal edge in the transition section 66. The entry opening 60 may have an upper lateral edge 60c adjacent to the channel 62 between the first upper edge 60a and the second upper edge 62a. The entry opening 60 may also have a lower lateral edge 60d adjacent to the channel 62 between the first lower edge 60b and the second lower edge 62b. The wall 34 may include an optional initial opening 67 and a terminal opening 68. The terminal opening 68 may be located at a lower position than the initial opening 67. The optional initial opening 67 may be larger than the terminal opening 68.

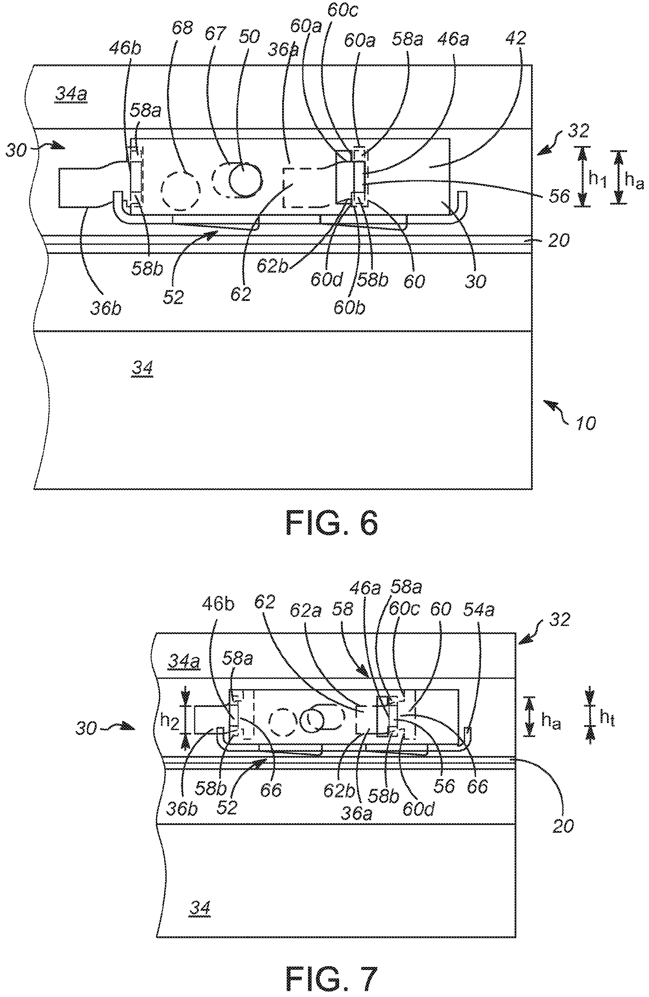

In FIG. 6 a method of assembly is shown for holding down a member which may be a deck 20 in a vessel 10 by use of the assembly 32 of the clip 30 and the wall 34. The method of assembly will be described with respect to one tab 46a and one cut-out 36a, but two or more tabs and cut-outs are used in the assembly and method as shown. In FIG. 6, edges of openings in the wall 34 are shown in dashed lines to indicate that they are behind the clip 30. Moreover, lugs 58a and 58b of tabs 46a and 46b are shown in dashed lines to indicate that they are behind the first panel 42. A first side 34a of the wall 34 is adapted to receive the tab 46a in the cut-out 36a and a recess 68 is disposed laterally to the cut-out. The recess 68 may be disposed laterally between the two cut-outs 36a and 36b.

In FIG. 6, the tab 46a is inserted into the cut-out 36a in the wall 34 in a first position. Specifically, the first tab 46a is inserted from the first side 34a into the entry opening 60 of the first cut-out 36a. The height h₁ of the entry opening 60 between the first upper edge 60a and the first lower edge 60b is greater than a tab height hₐ of the tab 46a to permit insertion of the tab 46a into the entry opening 60. Accordingly, the entry opening 60 is sufficiently tall and wide to permit entry of the tab including the first lug 58a and the trunk 56 and the second lug 58b if used. Upper lateral edge 60c and lower lateral edge 60d of the entry opening 60 limit lateral movement of the tab 46a in the channel 62 toward a second position unless the trunk 56 is aligned with the channel 62 between the second upper edge 62a and the second lower edge 62b. The optional initial opening 67 in the wall 34 may receive the protrusion 50 while in the first position. The optional second tab 46b may similarly be inserted from the first side 34a into the entry opening 60 of the second cut-out 36b. In the first position, the bill 52 does not necessarily engage the deck 20.

FIG. 7 shows the clip 30 in assembly 32 with the wall 34 in transition between the first position and a second position with the trunk 56 in a transition section 66 in the channel 62. In FIG. 7, edges of openings in the wall 34 are shown in dashed lines to indicate that they are behind the clip 30. Moreover, lugs 58a and 58b of tab 46a and 46b are shown in dashed lines to indicate that they are behind the first panel 42. The tab height hₐ of the first tab 46a is greater than the second height h₂ in the channel 62 in the first cut-out 36a, so the first lateral edge 60c and the second lateral edge 60d permit lateral movement to the second position because the trunk 56 is aligned with the channel 62 between the second upper edge 62a and the second lower edge 62b. The upturned edge 54a may be tapped from the outside with an instrument, such as a hammer, to move the clip 30 into transition between the first position and the second position and ultimately to the second position. The second height h₂ of the channel 62 is less than the tab height hₐ but greater than a trunk height hₜ of the trunk 56 to permit the trunk to slide laterally in the channel but prevent the lug 58, which could be the first lug 58a and the second lug 58b, from passing back through the channel to the first side 34a of the wall. The second tab 46b is similarly slid into the transition section 66 of the second cut-out 36b. The bill 52 may begin to engage the deck 20 while in transition to the second position.

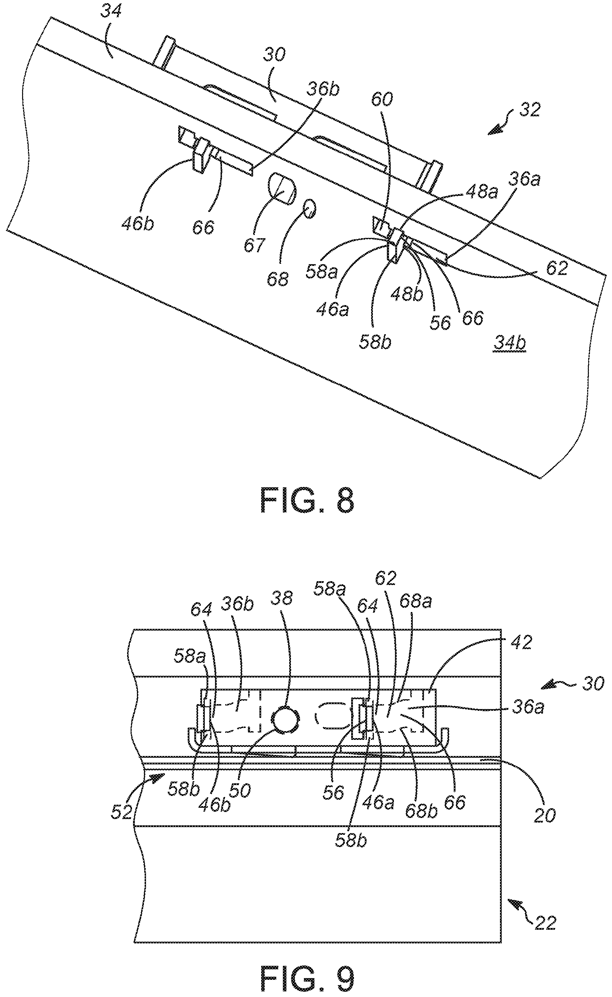

FIG. 8 shows the second side 34b of the wall 34 while the clip 30 is in assembly 32 with the wall 34 in transition between the first position and the second position with the trunk 56 in the transition section 66 in the channel 62. The proximal edge 48a of the lug 58a intrudes all the way into the entry opening 60 to clear a second side 34b of the wall 34. The proximal edge 48a of the lug 58a engages the second side 34b of the wall 34 upon insertion of the tab 46a into the cut-out 36a. and sliding the tab 46a. laterally. If the tab 46a has a second lug 58b, proximal edge 48b of the second lug 58b also engages the second side 34b of the wall upon insertion of the tab 46a into the cut-out and sliding the tab 46a laterally. The second tab 46b is similarly slid into the transition section 66 of the second cut-out 36b. FIG. 9 shows the clip 30 in the second position with the trunk 56 in the terminal section 64 of the channel 62. In FIG. 9, edges of openings in the wall 34 are shown in dashed lines to indicate that they are behind the clip 30. Moreover, lugs 58a and 58b of tab 46a and 46b are shown in dashed lines to indicate that they are behind the first panel 42. The transition section 66 of the channel 62 has an inclined upper edge 68a for camming the trunk 56 into the terminal section 64 as it transitions into the second position from the first position. The transition section 66 has an inclined lower edge 68b. The recess 38 is adapted to receive the protrusion 50 upon inserting the tab 46a into the cut-out 36a and sliding the tab in said cut-out laterally with respect to the recess into the terminal section 64 in the second position.

The recess 38 receives the protrusion 50 when the trunk 56 is in the terminal section 64 in the second position to lock the clip 30 in the second position. The second tab 46b is similarly slid into the terminal section 64 of the second cut-out 36b. The bill 52 extends downwardly from the second panel 54 and engages and applies pressure to the horizontal member which may be the deck 20 when the trunk 56 is in the terminal section 64 to hold the deck down relative to the downcomer 22.

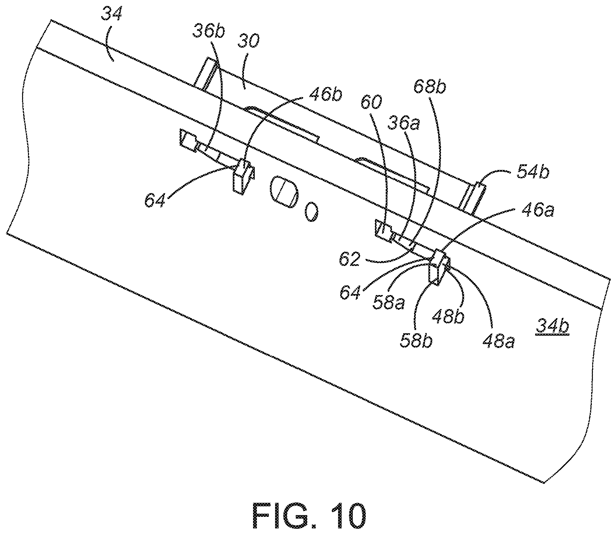

FIG. 10 shows the second side 34b of the wall 34 in the second position with the proximate edge 48a of the lug 58a engaging the second side 34b with the first tab 46a in the terminal section 64 of the channel 62 of the first cut-out 36a. Optionally, the proximate edge 48b of the lug 58b engages the second side 34b with the tab 46a in the terminal section 64 of the channel 62. The second tab 46b similarly is also in the terminal section 64 of the channel 62 of second cut-out 36b. In the second position, the clip 30 is locked in place to hold down the deck 20 relative to the wall 34. The clips 30 are easily installed thereby saving time and money in the installation and removal of the deck 20.

To move the clip 30 from the second position to the first position, the second upturned edge 54b can be hit from the outside with an instrument such as a hammer to transition the tab 46a from the second position up the inclined lower edge 68b of the channel 62 into the entry opening 60 to the first position. Referring to FIG. 7, while moving the clip 30 from the second position to the first position, the inclined lower edge 68b of the cut-out 36a cams the trunk 56 of the tab 46a in the transition section 66 of the channel 62 to the entry opening 60. In the first position, the first lug 58a of the tab 46a and perhaps the second lug 58b of the tab 46a clear the second sided 34b of the first panel 34 in the entry opening 60, so the tab 46a can be removed from the cut-out 36a, permitting the clip 30 to be disassembled from the wall 34 so the deck 20 can be removed. The same is done to remove the second tab 46b from the second cut-out 36b enabling removal of the clip 30 from the wall 34 in the assembly 32.

Without further elaboration, it is believed that using the preceding description that one skilled in the art can utilize the present invention to its fullest extent without departing from the scope thereof, to make various changes and modifications and to adapt it to various usages and conditions. The preceding preferred specific embodiments are, therefore, to be construed as merely illustrative, and not limiting the remainder of the disclosure in any way whatsoever, and that it is intended to cover various modifications included within the scope of the appended claims.

In the foregoing, all temperatures are set forth in degrees Celsius and, all parts and percentages are by weight, unless otherwise indicated.

## Claims

1. A clip assembly for holding down a member in a vessel (10) comprising:
a clip (30) comprising a first panel (42) comprising first and second tabs (46a, 46b) extending from said first panel (42) and a protrusion (50) extending from said first panel (42), and a second panel (44) integral with said first panel (42) for engaging the horizontal member, wherein the second panel (44) is normal to the first panel (42), and wherein the first and second tabs (46a, 46b) extend from the first panel (42) away from the second panel (44); and
a wall (34) in said vessel (10) comprising cut-outs (36) adapted to receive said tabs (46a, 46b) and a recess (38) disposed laterally to said cut-outs (36) and adapted to receive said protrusion (50) upon inserting said tabs (46a, 46b) into said cut-outs (36) and sliding said tabs (46a, 46b) in said cut-outs (36) laterally with respect to said recess (38); wherein the wall includes a first cut-out (36a) and a second cut-out (36b) for each assembly (32);
the clip assembly further including a bill (52) extending downwardly from said second panel (44) and configured to apply pressure to the horizontal member, and wherein the bill (52) extends away from the first panel (42);
wherein said wall (34) comprises a first side (34a) and a second side (34b), said clip (30) is adapted to be assembled adjacent to the first side (34a) and said tabs (46a, 46b) include a trunk (56) and a lug (58) extending from said trunk (56), said lug (58) engaging a second side (34b) of said wall (34) upon insertion of said tabs (46a, 46b) into said cut-outs (36) and sliding said tabs (46a, 46b) laterally;
wherein said cut-outs include an entry opening (60) of a first height (hi) between a first upper edge (60a) and a first lower edge (60b) that is greater than a tab height (hₐ) of said tabs (46a, 46b) to permit insertion of said lug (58) and trunk (56) through said entry opening (60) between said first upper edge (60a) and said first lower edge (60b), a channel located laterally to said entry opening, said channel (62) of a second height (h₂) between a second upper edge (62a) and a second lower edge (62b) that is less than said tab height (hₐ₎ but greater than a trunk height (ht) of said trunk (56) to permit said trunk (56) to slide laterally in the channel (62) but prevent said lug (58) from passing back through said channel (62);
the clip assembly further comprising a terminal section (64) in said channel (62), said recess (38) receives said protrusion (50) when said trunk (56) is in said terminal section (64);
the clip assembly further comprising a transition section (66) in said channel (62) between said entry opening (60) and said terminal section (64), said transition section (66) having an inclined upper edge (68a) for camming said trunk (56) into said terminal section (64); wherein said transition section (66) has an inclined lower edge (68b) for camming said trunk (56) into said entry opening (60).

2. The assembly of claim 1 wherein said entry opening (60) has lateral edges (60c), (60d) adjacent to said channel (62) between said first upper edge (60a) and said second upper edge (62a) and the first lower edge (60b) and said second lower edge (62b); said lateral edges (60c, 60d) limiting lateral movement of said tabs (46a, 46b) in said channel (62).

3. A method of holding down a horizontal member in a vessel (10) with the clip assembly of any of claims 1 to 2, the method comprising:
inserting the tabs (46a, 46b) extending from the first panel (42) into the cut-outs (36) in the wall (34) in a first position; and
sliding said tabs (46a, 46b) laterally to a second position in said cut-outs (36) at which the protrusion (50) extending from said first panel (42) engages the recess (38) in said wall (34) located laterally to said cut-outs (36).

## Patentansprüche

1. Klemmbaugruppe zum Untenhalten eines Elements in einem Gefäß (10), umfassend:
eine Klemme (30), umfassend eine erste Platte (42), die erste und zweite Laschen (46a, 46b), die sich von der ersten Platte (42) erstrecken, und einen Vorsprung (50), der sich von der ersten Platte (42) erstreckt, umfasst, und eine mit der ersten Platte (42) einstückige zweite Platte (44) zum Eingreifen in das horizontale Element, wobei die zweite Platte (44) senkrecht zu der ersten Platte (42) ist, und wobei sich die erste und die zweite Lasche (46a, 46b) von der ersten Platte (42) weg von der zweiten Platte (44) erstrecken; und
eine Wand (34) in dem Gefäß (10), umfassend Ausschnitte (36), die dazu angepasst sind, die Laschen (46a, 46b) aufzunehmen, und eine Aussparung (38), die seitlich zu den Ausschnitten (36) angeordnet ist und dazu angepasst ist, bei Einführen der Laschen (46a, 46b) in die Ausschnitte (36) und seitlichem Schieben der Laschen (46a, 46b) in die Ausschnitte (36) in Bezug auf die Aussparung (38) den Vorsprung (50) aufzunehmen; wobei die Wand einen ersten Ausschnitt (36a) und einen zweiten Ausschnitt (36b) für jede Baugruppe (32) beinhaltet;
wobei die Klemmbaugruppe ferner einen Schnabel (52) beinhaltet, der sich von der zweiten Platte (44) nach unten erstreckt und dazu konfiguriert ist, Druck auf das horizontale Element anzuwenden, und wobei der Schnabel (52) sich von der ersten Platte (42) weg erstreckt;
wobei die Wand (34) eine erste Seite (34a) und eine zweite Seite (34b) umfasst, die Klemme (30) dazu angepasst ist, benachbart zu der ersten Seite (34a) eingebaut zu sein und die Laschen (46a, 46b) einen Rumpf (56) und eine sich von dem Rumpf (56) erstreckende Nase (58) beinhalten, wobei bei Einführung der Laschen (46a, 46b) in die Ausschnitte (36) und seitlichem Schieben der Laschen (46a, 46b) die Nase (58) in eine zweite Seite (34b) der Wand (34) eingreift;
wobei die Ausschnitte Folgendes beinhalten:
eine Eingangsöffnung (60), die eine erste Höhe (h₁) zwischen einer ersten oberen Kante (60a) und einer ersten unteren Kante (60b) aufweist, die größer ist als eine Laschenhöhe (hₐ) der Laschen (46a, 46b), um eine Einführung der Nase (58) und des Rumpfs (56) durch die Eingangsöffnung (60) zwischen der ersten oberen Kante (60a) und der ersten unteren Kante (60b) zu erlauben, einen seitlich zu der Eingangsöffnung positionierten Kanal, wobei der Kanal (62) eine zweite Höhe (h₂) zwischen einer zweiten oberen Kante (62a) und einer zweiten unteren Kante (62b) aufweist, die kleiner als die Laschenhöhe (hₐ) aber größer als eine Rumpfhöhe (hₜ) des Rumpfs (56) ist, um zu erlauben, dass der Rumpf (56) sich seitlich in den Kanal (62) schiebt, um zu verhindern, dass die Nase (58) durch den Kanal (62) zurückgelangt,
wobei die Klemmbaugruppe ferner einen Anschlussabschnitt (64) in dem Kanal (62) umfasst, wobei die Aussparung (38) den Vorsprung (50) aufnimmt, wenn der Rumpf (56) in dem Anschlussabschnitt (64) ist;
wobei die Klemmbaugruppe ferner einen Übergangsabschnitt (66) in dem Kanal (62) zwischen der Eingangsöffnung (60) und dem Anschlussabschnitt (64) umfasst, wobei der Übergangsabschnitt (66) eine geneigte obere Kante (68a) zum Verzahnen des Rumpfs (56) in den Anschlussabschnitt (64); wobei der Übergangsabschnitt (66) eine geneigte untere Kante (68b) zum Verzahnen des Rumpfs (56) in die Eingangsöffnung (60) aufweist.

2. Baugruppe nach Anspruch 1, wobei die Eingangsöffnung (60) zu dem Kanal (62) benachbarte seitliche Kanten (60c), (60d) zwischen der ersten oberen Kante (60a) und der zweiten oberen Kante (62a) und der ersten unteren Kante (60b) und der zweiten unteren Kante (62b) aufweist; wobei die seitlichen Kanten (60c, 60d) eine seitliche Bewegung der Laschen (46a, 46b) in dem Kanal (62) begrenzen.

3. Verfahren zum Untenhalten eines horizontalen Elements in einem Gefäß (10) mit der Klemmbaugruppe nach einem der Ansprüche 1 bis 2, das Verfahren umfassend:
Einführen der Laschen (46a, 46b), die sich von der ersten Platte (42) in die Ausschnitte (36) in der Wand (34) erstrecken, in einer ersten Position; und
Schieben der Laschen (46a, 46b) seitlich in eine zweite Position in den Ausschnitten (36), in der der Vorsprung (50), der sich von der ersten Platte (42) erstreckt, in die seitlich zu den Ausschnitten (36) positionierte Aussparung (38) in der Wand (34) eingreift.

## Revendications

1. Ensemble d'attache pour retenir un élément dans une cuve (10) comprenant :
une attache (30) comprenant un premier panneau (42) comprenant des première et deuxième languettes (46a, 46b) s'étendant à partir dudit premier panneau (42) et une saillie (50) s'étendant à partir dudit premier panneau (42), et un deuxième panneau (44) formé d'un seul tenant avec ledit premier panneau (42) pour venir en prise avec l'élément horizontal, dans lequel le deuxième panneau (44) est perpendiculaire au premier panneau (42), et dans lequel les première et deuxième languettes (46a, 46b) s'étendent à partir du premier panneau (42) en s'éloignant du deuxième panneau (44) ; et
une paroi (34) dans ladite cuve (10) comprenant des découpes (36) adaptées pour recevoir lesdites languettes (46a, 46b) et un évidement (38) disposé latéralement par rapport auxdites découpes (36) et adapté pour recevoir ladite saillie (50) lors de l'insertion desdites languettes (46a, 46b) dans lesdites découpes (36) et du glissement desdites languettes (46a, 46b) dans lesdites découpes (36) latéralement par rapport audit évidement (38) ; dans lequel la paroi inclut une première découpe (36a) et une deuxième découpe (36b) pour chaque ensemble (32) ;
l'ensemble d'attache incluant en outre un bec (52) s'étendant vers le bas à partir dudit deuxième panneau (44) et configuré pour appliquer une pression sur l'élément horizontal, et dans lequel le bec (52) s'étend en s'éloignant du premier panneau (42) ;
dans lequel ladite paroi (34) comprend un premier côté (34a) et un deuxième côté (34b), ladite attache (30) est adaptée pour être assemblée adjacente au premier côté (34a) et lesdites languettes (46a, 46b) incluent un tronc (56) et un ergot (58) s'étendant à partir dudit tronc (56), ledit ergot (58) venant en prise avec un deuxième côté (34b) de ladite paroi (34) lors de l'insertion desdites languettes (46a, 46b) dans lesdites découpes (36) et du glissement desdites languettes (46a, 46b) latéralement ;
dans lequel lesdites découpes incluent
une ouverture d'entrée (60) d'une première hauteur (h₁) entre un premier bord supérieur (60a) et un premier bord inférieur (60b) qui est supérieure à une hauteur de languette (hₐ) desdites languettes (46a, 46b) pour permettre l'insertion dudit ergot (58) et dudit tronc (56) à travers ladite ouverture d'entrée (60) entre ledit premier bord supérieur (60a) et ledit premier bord inférieur (60b), un canal situé latéralement par rapport à ladite ouverture d'entrée, ledit canal (62) d'une deuxième hauteur (h₂) entre un deuxième bord supérieur (62a) et un deuxième bord inférieur (62b) qui est inférieure à ladite hauteur de languette (hₐ) mais supérieure à une hauteur de tronc (hₜ) dudit tronc (56) pour permettre audit tronc (56) de glisser latéralement dans le canal (62) mais pour empêcher ledit ergot (58) de repasser à travers ledit canal (62) ;
l'ensemble d'attache comprenant en outre une section terminale (64) dans ledit canal (62), dans lequel ledit évidement (38) reçoit ladite saillie (50) lorsque ledit tronc (56) est dans ladite section terminale (64) ;
l'ensemble d'attache comprenant en outre une section de transition (66) dans ledit canal (62) entre ladite ouverture d'entrée (60) et ladite section terminale (64), ladite section de transition (66) présentant un bord supérieur incliné (68a) pour amener, par effet de came, le tronc (56) dans ladite section terminale (64) ; dans lequel ladite section de transition (66) présente un bord inférieur incliné (68b) pour amener, par effet de came, ledit tronc (56) dans ladite ouverture d'entrée (60).

2. Ensemble selon la revendication 1, dans lequel ladite ouverture d'entrée (60) présente des bords latéraux (60c), (60d) adjacents audit canal (62) entre ledit premier bord supérieur (60a) et ledit deuxième bord supérieur (62a) et le premier bord inférieur (60b) et ledit deuxième bord inférieur (62b) ; lesdits bords latéraux (60c, 60d) limitant le mouvement latéral desdites languettes (46a, 46b) dans ledit canal (62).

3. Procédé pour retenir un élément horizontal dans une cuve (10) avec l'ensemble d'attache selon l'une quelconque des revendications 1 à 2, le procédé comprenant :
l'insertion des languettes (46a, 46b) s'étendant à partir du premier panneau (42) dans les découpes (36) dans la paroi (34) dans une première position ; et
le glissement desdites languettes (46a, 46b) latéralement jusqu'à une deuxième position dans lesdites découpes (36) dans laquelle la saillie (50) s'étendant à partir dudit premier panneau (42) vient en prise avec l'évidement (38) dans ladite paroi (34) situé latéralement par rapport auxdites découpes (36).
